# EUROPEAN PATENT SPECIFICATION

(11) **EP 2 527 973 B1**
(45) Date of publication and mention of the grant of the patent: **20.05.2020**
(21) Application number: 11179140.6
(22) Date of filing: 29.08.2011
(51) Int. Cl.: G06F 9/44, G06F 3/06

(54) **Computer system with multiple operation modes and method of switching modes thereof**
Computersystem mit mehreren Betriebsmodi und Verfahren zur Modusumschaltung dafür
Système informatique avec plusieurs modes de fonctionnement et procédé de commutation de modes associé

(30) Priority: 25.05.2011 TW 100118232
(43) Date of publication of application: 28.11.2012
(73) Proprietor: Giga-Byte Technology Co., Ltd., New Taipei City 231 (TW)
(72) Inventor: Chen, Shun Chen, 231 New Taipei City (TW); Han, Yu Kao, 231 New Taipei City (TW); Lin, Hou Yuan, 231 Hsin Tien (TW)
(74) Representative: Plasseraud IP

(56) References cited:
- US-A1- 2007 294 582
- US-A1- 2008 065 875
- US-B1- 6 671 751
- PATTERSON D A ET AL: "A CASE FOR REDUNDANT ARRAYS OF INEXPENSIVE DISKS (RAID)", SIGMOD RECORD, ACM, NEW YORK, NY, US, 1 January 1988 (1988-01-01), pages 109-116, XP000577756, ISSN: 0163-5808, DOI: 10.1145/971701.50214

## Description

### BACKGROUND OF THE INVENTION

### Field of Invention

The present invention relates to a switchable system and a switch method, more particularly, relates to a computer system with multiple operation modes and the switch method thereof.

### Related Art

The main function of the hard disk drive of the present computer system is to store up the boot program, operation system and files. Boot procedure starts after turning on the computer, thereafter the computer loads the boot program saved in the hard disk drive and completes the required parameter settings of the boot procedure by the boot program. When turning off the computer, the computer also writes the changes of related setting into the boot program for next boot procedure.

The efficiency of the computer system while turning on/off the computer is highly related to the efficiency of accessing the hard disk drive. In addition, the efficiency of the computer system in normal operation is also dependent on the efficiency of accessing the hard disk drive.

In general, there are two types of hard disk drive for computer system; one is Hard Disk Drive (HDD) and the other is Solid State Drive (SSD).

The structure of the HDD is more complicated than the SSD. The HDD mainly includes the read/write head, the platter, and the spindle motor. The SSD mainly includes the process unit and the storage unit. The process unit electrically connects to the storage unit and the process unit which is able to access the storage unit directly.

The HDD occupies larger space, performs slower data access speed and consumes more power because of its complicated structure. In contrast, the SSD possesses smaller size, higher access speed and less power consumption.

The HDD is more prevalent than the SSD in the present computer system because the memory size of the HDD is larger than the SSD. Additionally, the HDD is also cheaper than the SSD. However, as the computer system processing speed improved, the HDD becomes a bottleneck for both system on/off and data accessing due to its low efficiency.

Examples of the prior art may be found in US 2008/065875 A1 which discloses a computing apparatus that has a system ROM comprising a system Basic Integrated Operating System (BIOS) that implements Redundant Array of Independent Disks (RAID) protection on a boot volume. The BIOS implements the RAID protection for supporting multiple different disks and disk controllers for designs of manufacturers. The system BIOS implements the RAID protection to coexist with software RAID drivers loaded by an operating system after system bootstrap loading. The system BIOS remaps disk units that are not RAID volumes and US 2007/294582 A1 which discloses methods and systems for reporting a software RAID configuration to the systems BIOS. An operating system agent may write information about hard disk drives associated with a software RAID and/or those hard disk drives being boot configured to a non-volatile memory of an information handling system. Then during power on self test (POST) of the information handling system a determination is made whether a software OS RAID hard disk drive control function has been implemented into the OS. Then a comparison of the stored hard disk drive information is made with the presently operating hard disk drives and if there is any discrepancy then a warning message may be displayed indicating that there may be a problem in using the hard disk drives in a software RAID, and/or booting up during POST into the OS of the information handling system.

### SUMMARY OF THE INVENTION

A first aspect of the present invention relates to a computer system for switching an operation mode to a Redundant Array of Independent Disks, RAID, operation mode, as defined in appended claims. The present invention improves the efficiency of the hard disk drives while turning on/off the computer and accessing stored data.

Another aspect of the invention relates to a method of switching an operation mode to a Redundant Array of Independent Disks, RAID, operation mode, as defined in appended claims.

The present invention does not only improve the efficiency of general data access by the operation mode of the Redundant Array of Independent Disks (RAID) of the hard disk drives but also promotes the performance of the hard disk drives by substituting the Solid State Drives for the Hard Disk Drives as the storage device. The improved performance of the hard disk drives is not limited to the general data access or turning on/off procedure.

Further objects and advantages are apparent in the drawings and in the detailed description which follows.

### BRIEF DESCRIPTION OF THE DRAWINGS

- Fig.1: illustrates the block chart of the computer system of the present disclosure.
- Fig.2: illustrates the flow chart of the computer system of the present disclosure.

### DETAIL DESCRIPTION OF THE INVENTION

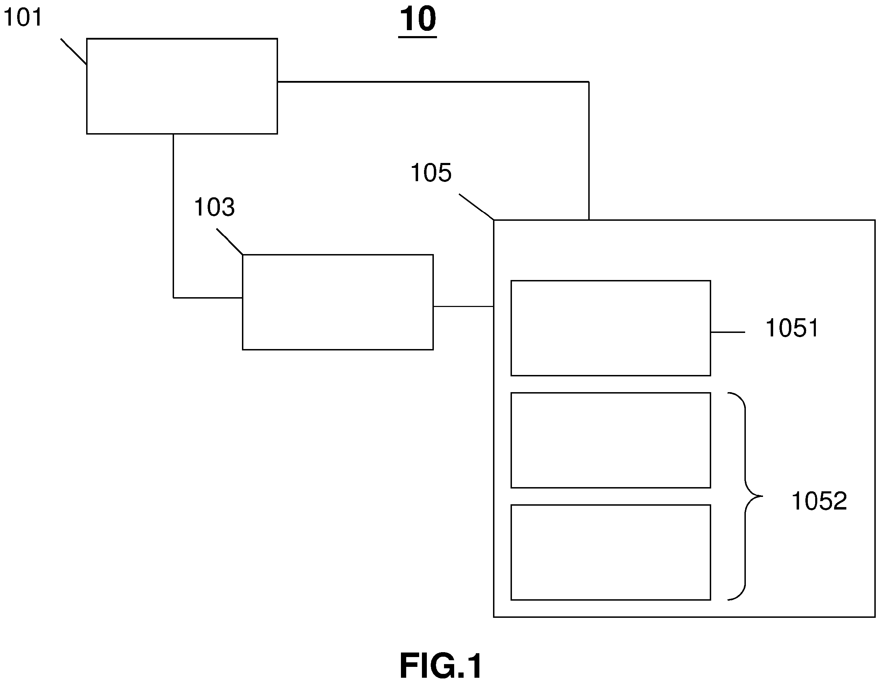

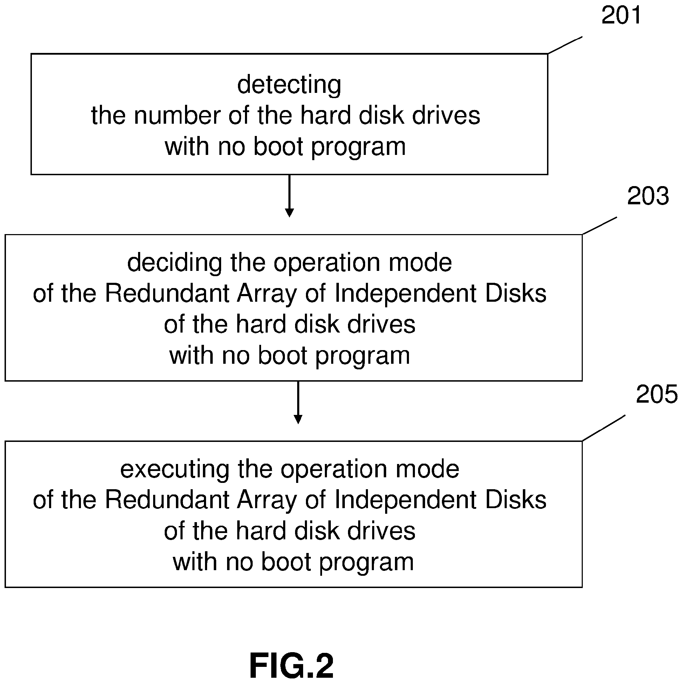

Figure 1 illustrates the block chart of a computer system and Figure 2 illustrates the flow chart of a switch method of the computer system of the present invention.

This is a preferred embodiment of the present invention.

The computer system 10 of the present invention includes a chip unit 101, a switch unit 103 and a plurality of the hard disk drives 105. The chip unit 101 electrically connects to the hard disk drives 105. The switch unit 103 electrically connects to the chip unit 101 and the hard disk drives 105. At least one hard disk drive 1051 of the hard disk drives 105 contains a boot program and the hard disk drive 1051 executes the boot operation normally.

The hard disk drives 105 of the present invention could be the Hard Disk Drive (HDD) or the Solid State Drive (SSD). However, the type of the hard disk drives 105 of the present invention is not limited to the present embodiment.

The switch unit 103 of the present invention could be a control chip or a General Purpose Input Output (GPIO). However, the type of the switch unit 103 of the present invention is not limited to the present embodiment.

Referring to Figure 1 and Figure 2, step 201 describes the process that the chip unit 101 detects the memory space of the hard disk drives 105 to obtain the number of the hard disk drives with no boot program. The detecting process separates the hard disk drives 105 into two parts: at least one hard disk drive 1051 containing the boot program and a plurality of hard disk drives 1052 with no boot program. Simultaneously, the respective count of the hard disk drive 1051 and the hard disk drives 1052 is also obtained.

Referring to Figure 2, step 203 describes the process that the chip unit 101 decides whether it switches the hard disk drives 1052 to prosecute Redundant Array of Independent Disks (RAID) operation mode according to a mode setting saved in the chip unit 101, and the chip unit 101 also decides the type of the RAID operation mode. The chip unit 101 generates a control signal according to the decision, then transmits the control signal to the switch unit 103.

Referring to Figure 2, step 205 describes the process that the switch unit 103 receives the control signal and generates a corresponding setting signal in accordance with the control signal. Later on, the switch unit 103 transmits the setting signal to the hard disk drives 1052, which executes the RAID operation mode.

Referring to Figure 2, the mode setting saved in the chip unit 101 in step 203 could be manipulated by the user under the operation system. The mode setting decides whether the chip unit 101 switches the operation mode to the RAID operation mode or not and it also decides the type of the RAID operation mode. The mode setting is dependent on the count of the hard disk drives 1052 and user's requirement. Thereafter, the chip unit 101 produces the control signal in accordance with the mode setting.

In the other way, referring to step 203 in Figure 2, the mode setting saved in the chip unit 101 in step 203 could also be manipulated by the user under Basic Input Output System (BIOS). The mode setting decides whether the chip unit 101 switches the operation mode to the RAID operation mode or not, and it also decides the type of the RAID operation mode. The mode setting is dependent on the count of the hard disk drives 1052 and user's requirement. Thereafter, the chip unit 101 produces the control signal corresponding to the mode setting.

The basic feature of the Redundant Array of Independent Disks (RAID) is a combination of multiple hard disk drives and forming a single array of the hard disk drives. A controller of RAID provides various RAID operation modes with better data access and backup performance. Compared to the single hard disk drive, the RAID is fit to data integration, error detecting and larger memory. Common operation modes of RAID include RAID-0, RAID-1, RAID-IE, RAID-5, RAID-6, RAID-7, RAID-10, and RAID-50. In addition, the computer system configures the RAID as a single disk or a single logic drive because the RAID controller combines multiple hard disk drives together to form a single logic drive.

The operation mode of the RAID of the present invention is not limited to the present embodiment. In fact, there are various combinations of the RAID modes. For example, the RAID 0 mode provides Striping/Span function, and this mode integrates hard disk drives together into one logic drive but separates the data into several parts which are saved in the different hard disk drive respectively. The RAID 0 mode access all partial data at the same time from different hard disk drives. The RAID 0 mode improves the efficiency of data access because it accesses the data from multiple drives at the same time; however, it only operates with no error detection. In common practice, the RAID 0+1 mode combines the RAID 0 and RAID 1 together. The RAID 0+1 mode provides both high efficiency from the RAID 0 mode and the backup function from the RAID 1 mode. But the hard disk drives required by the RAID 0+1 mode must contain at least 4 drives or any even number above 4. The RAID mode of the present invention is decided by the number of the hard disk drives and user's application.

The method of switching the operation modes of the computer system is applicable to the multiple hard disk drives which are with no boot program. If there are hard disk drives with no boot program, the method promotes the performance of the hard disk drives of the computer system by the RAID modes. The method also substitutes the Hard Disk Drives with the Solid State Drives as the storage device to improve the efficiency of the hard disk drives whether it contains the boot program or not.

While the invention has been described in terms of what is presently consider to be the preferred embodiments, it is to be understood that the invention needs not be limited to the disclosed embodiment. On the contrary, it is intended caver various modifications and similar arrangements included within the spirit and scope of the appended claims which are to be accorded with the broadest interpretation so as to encompass all such modification and similar structures. It is therefore intended by the appended claims to define the true scope of the invention.

The basic feature of the Redundant Array of Independent Disks (RAID) is a combination of multiple hard disk drives and forming a single array of the hard disk drives. A controller of RAID provides various RAID operation modes with better data access and backup performance. Compared to the single hard disk drive, the RAID is fit to data integration, error detecting and larger memory. Common operation modes of RAID include RAID-0, RAID-1, RAID-IE, RAID-5, RAID-6, RAID-7, RAID-10, and RAID-50. In addition, the computer system configures the RAID as a single disk or a single logic drive because the RAID controller combines multiple hard disk drives together to form a single logic drive.

The operation mode of the RAID of the present invention is not limited to the present embodiment. In fact, there are various combinations of the RAID modes. For example, the RAID 0 mode provides Striping/Span function, and this mode integrates hard disk drives together into one logic drive but separates the data into several parts which are saved in the different hard disk drive respectively. The RAID 0 mode access all partial data at the same time from different hard disk drives. The RAID 0 mode improves the efficiency of data access because it accesses the data from multiple drives at the same time; however, it only operates with no error detection. In common practice, the RAID 0+1 mode combines the RAID 0 and RAID 1 together. The RAID 0+1 mode provides both high efficiency from the RAID 0 mode and the backup function from the RAID 1 mode. But the hard disk drives required by the RAID 0+1 mode must contain at least 4 drives or any even number above 4. The RAID mode of the present invention is decided by the number of the hard disk drives and user's application.

The method of switching the operation modes of the computer system is applicable to the multiple hard disk drives which are with no boot program. If there are hard disk drives with no boot program, the method promotes the performance of the hard disk drives of the computer system by the RAID modes. The method also substitutes the Hard Disk Drives with the Solid State Drives as the storage device to improve the efficiency of the hard disk drives whether it contains the boot program or not.

While the invention has been described in terms of what is presently consider to be the preferred embodiments, it is to be understood that the invention needs not be limited to the disclosed embodiment. It is therefore intended by the appended claims to define the true scope of the invention.

## Claims

1. A computer system (10) for switching an operation mode to a Redundant Array of Independent Disks, RAID, operation mode, the computer system comprising:
a plurality of hard disk drives (105), at least one of the hard disk drives (1051) containing and executing a boot program normally;
a chip unit (101) electrically connecting to the hard disk drives (105);
wherein the computer system further comprises:
a switch unit (103) electrically connecting to the chip unit (101) and the hard disk drives (105);
**characterized in that** the chip unit (101) is configured to:
determine (201) a number of hard disk drives (1052) with no boot program among the plurality of hard disk drives (105);
determine (203) a RAID operation mode among the plurality of RAID operation modes based on said number of hard disk drives (1052) with no boot program;
based on said determination of the RAID operation mode, generate a control signal; and
transmit the control signal to the switch unit (103);
wherein the switch unit (103) is configured to:
upon receiving the control signal, generate a corresponding setting signal according to the control signal, and
transmit the setting signal to the hard disk drives (1052) with no boot program,
the hard disk drives (105) with no boot program being further configured to:
upon receiving the setting signal, switching (205) an operation mode to the determined RAID operation mode.

2. The computer system (10) of claim 1, wherein the hard disk drive (105) is a Solid State Drive.

3. The computer system (10) of claim 1, wherein the switch unit (103) is a control chip.

4. The computer system (10) of claim 1, wherein the switch unit (103) is a General Purpose Input Output.

5. A method of switching an operation mode to a Redundant Array of Independent Disks, RAID, operation mode in a computer system (10), the method being **characterized by** comprising:
determining, by a chip unit (101), a number of hard disk drives (1052) with no boot program among a plurality of hard disk drives (105);
determining (203), by the chip unit (101), a RAID operation mode among the plurality of RAID operation modes based on said number of hard disk drives (105) with no boot program;
based on said determination of the RAID operation mode, generating, by the chip unit (101), a control signal, and
transmitting, by the chip unit (101), the control signal to a switch unit (103);
upon receiving the control signal, generating, by the switch unit (103), a corresponding setting signal according to the control signal, and
transmitting, by the switch unit (103), the setting signal to the hard disk drives (1052) with no boot program ; and
upon receiving the setting signal, switching (205), by the hard disk drives (105) with no boot program, an operation mode to the determined RAID operation mode.

6. The method of claim 5 further comprising:
determining the control signal of the chip unit (101) and the operation mode of the RAID of the hard disk drives (105) by an operation system.

7. The method of claim 5 further comprising the steps of:
determining the control signal of the chip unit (101) and the operation mode of the RAID of the hard disk drives (105) by a Basic Input Output System.

## Patentansprüche

1. Computersystem (10) zum Schalten eines Betriebsmodus zu einem Redundant-Array-of-Independent-Disks-, RAID, Betriebsmodus, wobei das Computersystem umfasst:
eine Mehrzahl von Festplattenlaufwerken (105), wobei wenigstens eines der Festplattenlaufwerke (1051) ein Boot-Programm enthält und dieses normal ausführt;
eine Chipeinheit (101), welche elektrisch mit den Festplattenlaufwerken (105) verbunden ist;
wobei das Computersystem ferner umfasst:
eine Schalteinheit (103), welche elektrisch mit der Chipeinheit (101) und den Festplattenlaufwerken (105) verbunden ist;
**dadurch gekennzeichnet, dass** die Chipeinheit (101) eingerichtet ist zum:
Bestimmen (201) einer Anzahl von Festplattenlaufwerken (1052) mit keinem Boot-Programm unter der Mehrzahl von Festplattenlaufwerken (105);
Bestimmen (203) eines RAID-Betriebsmodus unter der Mehrzahl von RAID-Betriebsmodi basierend auf der Anzahl von Festplattenlaufwerken (1052) mit keinem Boot-Programm;
basierend auf der Bestimmung des RAID-Betriebsmodus, Erzeugen eines Steuersignals; und
Übertragen des Steuersignals zu der Schalteinheit (103),
wobei die Schalteinheit (103) eingerichtet ist zum:
auf ein Empfangen des Steuersignals hin, Erzeugen eines entsprechenden Stellsignals gemäß dem Steuersignal, und
Übertragen des Stellsignals zu den Festplattenlaufwerken (1052) mit keinem Boot-Programm,
wobei die Festplattenlaufwerke (105) mit keinem Boot-Programm ferner eingerichtet sind zum:
auf ein Empfangen des Stellsignals hin, Schalten (205) eines Betriebsmodus zu dem bestimmten RAID-Betriebsmodus.

2. Computersystem (10) nach Anspruch 1, wobei das Festplattenlaufwerk (105) ein Solid-State-Laufwerk ist.

3. Computersystem (10) nach Anspruch 1, wobei die Schalteinheit (103) ein Steuerchip ist.

4. Computersystem (10) nach Anspruch 1, wobei die Schalteinheit (103) ein General-Purpose-Input-Output ist.

5. Verfahren eines Schaltens eines Betriebsmodus zu einem Redundant-Array-of-Independent-Disks-, RAID, Betriebsmodus in einem Computersystem (10), wobei das Verfahren, **dadurch gekennzeichnet ist, dass** es umfasst:
Bestimmen, durch eine Chipeinheit (101), einer Anzahl von Festplattenlaufwerken (1052) mit keinem Boot-Programm unter einer Mehrzahl von Festplattenlaufwerken (105);
Bestimmen (203), durch die Chipeinheit (101), eines RAID-Betriebsmodus unter der Mehrzahl von RAID-Betriebsmodi basierend auf der Anzahl von Festplattenlaufwerken (105) mit keinem Boot-Programm;
basierend auf der Bestimmung des RAID-Betriebsmodus, Erzeugen, durch die Chipeinheit (101), eines Steuersignals, und
Übertragen, durch die Chipeinheit (101), des Steuersignals zu einer Schalteinheit (103);
auf ein Empfangen des Steuersignals hin, Erzeugen, durch die Schalteinheit (103), eines entsprechenden Stellsignals gemäß dem Steuersignal, und
Übertragen, durch die Schalteinheit (103), des Stellsignals zu den Festplattenlaufwerken (1052) mit keinem Boot-Programm; und
auf ein Empfangen des Stellsignals hin, Schalten (205), durch die Festplattenlaufwerke (105) mit keinem Boot-Programm, eines Betriebsmodus zu dem bestimmten RAID-Betriebsmodus.

6. Verfahren nach Anspruch 5, ferner umfassend:
Bestimmen des Steuersignals der Chipeinheit (101) und des Betriebsmodus der RAID der Festplattenlaufwerke (105) durch ein Betriebssystem.

7. Verfahren nach Anspruch 5, ferner umfassend die folgenden Schritte:
Bestimmen des Steuersignals der Chipeinheit (101) und des Betriebsmodus der RAID der Festplattenlaufwerke (105) durch ein Basic-Input-Output-System.

## Revendications

1. Système informatique (10) pour la commutation d'un mode de fonctionnement à un mode de fonctionnement à réseau redondant de disques indépendants, RAID, le système informatique comprenant :
une pluralité de lecteurs de disque dur (105), au moins l'un des lecteurs de disque dur (1051) contenant et exécutant normalement un programme d'amorçage ;
une unité de puce (101) se reliant électriquement aux lecteurs de disque dur (105) ;
dans lequel le système informatique comprend en outre :
une unité de commutation (103) se reliant électriquement à l'unité de puce (101) et aux lecteurs de disque dur (105) ;
**caractérisé en ce que** l'unité de puce (101) est configurée pour :
déterminer (201) un nombre de lecteurs de disque dur (1052) sans aucun programme d'amorçage parmi la pluralité de lecteurs de disque dur (105) ;
déterminer (203) un mode de fonctionnement RAID parmi la pluralité de modes de fonctionnement RAID sur la base dudit nombre de lecteurs de disque dur (1052) sans aucun programme d'amorçage ;
sur la base de ladite détermination du mode de fonctionnement RAID, générer un signal de commande ; et
transmettre le signal de commande à l'unité de commutation (103) ;
dans lequel l'unité de commutation (103) est configurée pour :
à la réception du signal de commande, générer un signal de réglage correspondant en fonction du signal de commande, et
transmettre le signal de réglage aux lecteurs de disque dur (1052) sans aucun programme d'amorçage,
les lecteurs de disque dur (105) sans aucun programme d'amorçage étant en outre configurés pour :
à la réception du signal de réglage, commuter (205) un mode de fonctionnement au mode de fonctionnement RAID déterminé.

2. Système informatique (10) selon la revendication 1, dans lequel le lecteur de disque dur (105) est un disque SSD.

3. Système informatique (10) selon la revendication 1, dans lequel l'unité de commutation (103) est une puce de commande.

4. Système informatique (10) selon la revendication 1, dans lequel l'unité de commutation (103) est une entrée/sortie à usage général.

5. Procédé pour la commutation d'un mode de fonctionnement à un mode de fonctionnement à réseau redondant de disques indépendants, RAID, dans un système informatique (10), le procédé étant **caractérisé en ce qu'**il comprend :
la détermination, par une unité de puce (101), d'un nombre de lecteurs de disque dur (1052) sans aucun programme d'amorçage parmi une pluralité de lecteurs de disque dur (105) ;
la détermination (203), par l'unité de puce (101), d'un mode de fonctionnement RAID parmi la pluralité de modes de fonctionnement RAID sur la base dudit nombre de lecteurs de disque dur (105) sans aucun programme d'amorçage ;
sur la base de ladite détermination du mode de fonctionnement RAID, la génération, par l'unité de puce (101), d'un signal de commande ; et
la transmission, par l'unité de puce (101), du signal de commande à une unité de commutation (103) ;
à la réception du signal de commande, la génération, par l'unité de commutation (103), d'un signal de réglage correspondant en fonction du signal de commande, et la transmission, par l'unité de commutation (103), du signal de réglage aux lecteurs de disque dur (1052) sans aucun programme d'amorçage ; et
à la réception du signal de réglage, la commutation (205), par les lecteurs de disque dur (105) sans aucun programme d'amorçage, d'un mode de fonctionnement au mode de fonctionnement RAID déterminé.

6. Procédé selon la revendication 5, comprenant en outre :
la détermination du signal de commande de l'unité de puce (101) et du mode de fonctionnement du RAID des lecteurs de disque dur (105) par un système d'exploitation.

7. Procédé selon la revendication 5, comprenant en outre les étapes de :
détermination du signal de commande de l'unité de puce (101) et du mode de fonctionnement du RAID des lecteurs de disque dur (105) par un système d'entrée/sortie de base.
